# EUROPÄISCHE PATENTSCHRIFT

(11) **EP 2 845 813 B1**
(45) Veröffentlichungstag und Bekanntmachung des Hinweises auf die Patenterteilung: **23.08.2017**
(21) Anmeldenummer: 14178483.5
(22) Anmeldetag: 25.07.2014
(51) Int. Cl.: B65C 3/26, B41J 3/407

(54) **Einspanneinheit für Behälter an Behälterbehandlungsmaschinen**
Clamping unit for containers on container handling machines
Unité de serrage pour récipients sur des machines de traitement de récipients

(30) Priorität: 04.09.2013 DE 102013217657
(43) Veröffentlichungstag der Anmeldung: 11.03.2015
(73) Patentinhaber: Krones AG, 93073 Neutraubling (DE)
(72) Erfinder: Kraus, Andreas, 93073 Neutraubling (DE); Peutl, August, 93073 Neutraubling (DE)
(74) Vertreter: Grünecker Patent- und Rechtsanwälte PartG mbB

(56) Entgegenhaltungen:
- DE-A1- 2 726 822
- DE-A1-102009 003 649
- DE-U1- 20 019 839
- US-A- 1 978 002
- US-A- 3 410 377
- US-A- 3 559 702
- US-A- 4 024 896
- US-A- 4 253 904
- US-A- 4 405 403
- US-A1- 2006 000 299

## Beschreibung

Die Erfindung betrifft eine Einspanneinheit für Behälter an Behälterbehandlungsmaschinen nach dem Oberbegriff des Anspruchs 1 sowie eine Behälterbehandlungsmaschine, insbesondere zum Direktbedrucken von Behältern, mit mehreren Einspanneinheiten. Während der Bearbeitung in Behälterbehandlungsmaschinen, insbesondere in Rundläufermaschinen, beispielsweise beim Etikettieren oder Bedrucken, werden Behälter, wie beispielsweise Getränkeflaschen oder dergleichen, üblicherweise auf einem kontinuierlich oder im Takt angetriebenen Karussell in umfänglich gleichmäßig verteilten Einspanneinheiten gehalten. Um dabei die Drehlage der Behälter bezüglich der Umlaufbahn des Karussells einzustellen, werden die Behälter vorzugsweise auf Drehteller gesetzt und im Mündungsbereich oder Verschlussbereich von einer Zentrierhalterung, beispielsweise einer Zentrierglocke, nach unten gedrückt. Dabei muss zum Einen auf eine ausreichende Einspannkraft geachtet werden, damit eine korrekte Position der Behälter in den Einspanneinheiten trotz seitlich einwirkender Kräfte, wie beispielsweise Fliehkräfte und/oder durch die Bearbeitung verursachter Andruckkräfte oder dergleichen, gewährleistet bleibt. Zum Anderen sind je nach mechanischer Stabilität der Behälter Maximalwerte der Einspannkraft einzuhalten, um eine unerwünschte Verformung und/oder eine Beschädigung der Behälter zu vermeiden.

Geeignete Einspannkräfte lassen sich bekanntermaßen mit mechanischen Druckfedern erzeugen. Insbesondere bei der Bearbeitung leerer Kunststoffflaschen hat sich eine zusätzliche Stabilisierung der Behälter, insbesondere bei deren Etikettierung, durch Anlegen eines Überdrucks im Inneren der Behälter bewährt. Um die Zentrierhalterungen beim Zuführen / Entnehmen der Behälter in / aus der Rundläufermaschine in eine geeignete Position anzuheben, werden üblicherweise stationäre Hubkurven eingesetzt, an denen die Zentriereinheiten entlang laufen.

Die US 2006/000299 A1 offenbart eine Inspektionseinheit zum gezielten Absenken eines Messkopfs auf/in die Mündung eines Behälters. Ein motorische Antrieb des Hubarms lässt zwischen einem Reibrad und einer Gegendruckrolle einen Schlupf zu, um die mechanische Einwirkung des Messkopfs auf den Behälter zu begrenzen. Eine optionale pneumatische Feder dient dazu, ein sanftes Aufsetzen des Messkopfs auf den Behältern zu fördern und gegebenenfalls den obigen Schlupf entbehrlich zu machen.

Die US 4 253 904 A offenbart eine Einspanneinheit für Behälter gemäß dem Oberbegriff des Anspruchs 1, mit konischen Druckluftdüsen, die sich zentrierend auf Behältermündungen absenken lässt. Der jeweilige Betätigungsmechanismus basiert auf einem Hin- und Herschalten eines Hubkolbens, indem Druckluft abwechselnd über Druckleitungen an einen Druckzylinder angelegt wird. Dieser betätigt ein darunter liegendes Ventil zum Beaufschlagen des Behälterinneren mit Druckluft, die über eine weitere Druckleitung bereitgestellt wird. Die Hubkolben sind auf einer Montageplattform gelagert, die zur Drehung um sich selbst fest mit einer zentralen Welle verbunden ist.

Nachteilig beim obigen Stand der Technik ist, dass die Einspannkraft mechanischer Druckfedern festgelegt ist. Sollen in der Rundläufermaschine unterschiedliche Behältertypen bearbeitet werden, die sich beispielsweise hinsichtlich ihrer Materialeigenschaften, Wandstärken oder Größe unterscheiden, so sind derart vorgegeben Einspannkräfte nur eingeschränkt oder nicht geeignet. Die Einspanneinheiten sind folglich aufwändig umzurüsten. Nachteilig ist ferner, dass die vertikale Stellung der Zentrierhalterungen davon abhängt, an welchem Abschnitt der Hubkurve sich die jeweilige Einspanneinheit gerade befindet. Bei stillstehender Rundläufermaschine lassen sich die Zentriereinheiten daher nicht für eine bestimmte Maßnahme heben / senken.

Es gibt somit Bedarf für Einspanneinheiten für Behälter an Rundläufermaschinen, bei denen wenigstens einer der obigen Nachteile vermieden oder zumindest abgemildert wird.

Die gestellte Aufgabe wird mit einer Einspanneinheit für Behälter nach Anspruch 1 gelöst. Demnach eignet sich diese insbesondere zum Direktbedrucken der Behälter auf Rundläufermaschinen. Die Einspanneinheit umfasst einen in vertikaler Richtung beweglichen Hubarm mit einer Zentrierhalterung zum Einspannen eines Behälters von oben. Der Behälter ist insbesondere eine Flasche, wie beispielsweise eine Getränkeflasche oder dergleichen. Die Einspanneinheit umfasst ferner einen Motor zum Antrieb des Hubarms und eine pneumatische Feder, gegen deren Widerstand die Zentrierhalterung nach oben beweglich an dem Hub angelagert ist.

Der Motor ist beispielsweise ein Schrittmotor oder ein Servomotor. Der Motor ermöglicht einen von der Drehlage der jeweiligen Rundläufermaschine unabhängigen Hub des Hubarms und der daran befestigten Zentrierhalterung, insbesondere auch bei einem Stillstand der Rundläufermaschine. Beispielsweise können bei einer Instandhaltungsmaßnahme und/oder einer Produktionsstörung Behälter gezielt aus einzelnen Einspanneinheiten entnommen werden. Alternativ kann auch im Maschinentaktbetrieb eine Übergabe / ein Einspannen der Behälter während des Karussellstillstands stattfinden.

Die Federkraft der pneumatischen Feder wird durch einen mit Gas, beispielsweise Luft, insbesondere Druckluft, gefüllten Hubraum bereitgestellt. Der Widerstand der pneumatischen Feder entsteht somit durch Komprimieren des Hubraums. Der einem eingespannten Behälter entgegen gebrachte Widerstand der pneumatischen Feder, entsprechend der Einspannkraft, lässt sich durch den im Hubraum bei unbelasteter Feder herrschenden Druck einstellen. Somit lässt sich die Federkraft der pneumatischen Feder durch Einstellen des an dieser anliegenden Überdrucks flexibel an unterschiedliche Behältertypen und/oder Behandlungsschritte anpassen.

Ferner umfasst die Einspanneinheit wenigstens eine Druckleitung, über die sich die pneumatische Feder mit Druckluft beaufschlagen lässt. Die pneumatische Feder kann dann von außen, insbesondere von einem zentralen, an der Rundläufermaschine vorhandenen Druckluftverteiler versorgt werden. Der Hubraum könnte jedoch prinzipiell auch abgeschlossen und sein Volumen im unbelasteten Zustand, also ohne eingespannten Behälter, verstellbar sein. Beispielsweise könnte der Hubraum ausgehend vom Umgebungsdruck zunächst auf ein Anfangsvolumen vorkomprimiert werden, beispielsweise mittels eines unabhängig von der Zentriereinheit beweglichen separaten Kolbens, um einen für die benötigte Federkraft geeigneten Überdruck zu erzeugen.

Vorzugsweise umfasst die erfindungsgemäße Einspanneinheit ferner eine von dem Motor angetriebene Gewindespindel und eine fest mit dem Hubarm verbundene oder an dem Hubarm ausgebildete Spindelmutter. Damit lässt sich der Hubarm besonders präzise in eine untere Einspannstellung, bei der ein Behälter mittels der pneumatischen Feder eingespannt wird, und in eine obere Übergabestellung, bei der sich der Behälter in die Einspanneinheit einsetzen oder sich aus dieser entnehmen lässt, fahren. Der Hubarm ist zu diesem Zweck vorzugsweise linear in vertikaler Richtung geführt. Alternativ kann die Hubbewegung durch einen linearen Direktantrieb erfolgen.

Vorzugsweise ist die pneumatische Feder derart ausgebildet, dass sich deren Widerstand in Abhängigkeit von einem an die Druckleitung angelegten Luftdruck einstellen lässt. Somit lässt sich die Einspannkraft mittels der pneumatischen Feder besonders flexibel, schnell und präzise einstellen.

Vorzugsweise umfasst die pneumatische Feder einen fest mit dem Hubarm verbundenen Kolben sowie einen dem gegenüber beweglichen Hubzylinder, der mit der Zentrierhalterung verbunden ist. In dem Kolben lässt sich dann beispielsweise ein Druckluftkanal zur Versorgung des Hubraums ausbilden. Ein auf einem feststehenden Kolben verschiebbarer Hubzylinder lässt sich auf konstruktiv einfache Weise im Wesentlichen rohrförmig ausbilden. An einem derartigen Hubzylinder lässt sich ferner die Zentrierhalterung besonders vorteilhaft drehbar lagern. Vorzugsweise ist die Zentrierhalterung drehbar an der pneumatischen Feder gelagert. Dies vereinfacht die Drehlagenausrichtung des eingespannten Behälters. Alternativ kann die Zentrierhalterung auch über einen eigenen kompakten Drehantrieb verfügen und somit die Drehlagenausrichtung des eingespannten Behälters vornehmen.

Vorzugsweise ist in der Zentrierhalterung wenigstens ein Druckluftkanal zum Zuführen von Druckluft, vorzugsweise gefilterter bzw. steriler Druckluft in den Behälter ausgebildet. Damit lässt sich Druckluft in einen eingespannten Behälter einleiten, um dessen mechanische Widerstandsfähigkeit gezielt zu erhöhen.

Vorzugsweise umfasst die Einspanneinheit ferner eine Konsole, oder dergleichen Rahmen, zum Lagern des Hubarms und des Motors und zur modularen Montage der Einspanneinheit an einer Behälterbehandlungsmaschine, insbesondere einer Rundläufermaschine. Darunter ist zu verstehen, dass die Konsole insbesondere selbstragend ausgebildet ist und sich die Einspanneinheit als ein vormontiertes Modul befestigen / austauschen lässt. Beispielsweise müssen nach der Befestigung des Moduls lediglich noch Versorgungsleitungen, wie beispielsweise Druckschläuche oder dergleichen, an die Einspanneinheit angeschlossen werden. Dies erleichtert die Installation, Instandhaltung und/oder Umrüstung an Rundläufermaschinen. In einer Ausführungsform kann diese Konsole außerdem den für die Behälterdrehung und Bodenzentrierung notwendigen Drehteller enthalten.

Vorzugsweise umfasst die Einspanneinheit dann ferner einen unter der Zentrierhalterung an der Konsole gelagerten Drehteller. Die Einspannstation lässt sich dann besonders flexibel an unterschiedlichen Behandlungsmaschinen einsetzen.

Die gestellte Aufgabe wird ferner mit einer Behälterbehandlungsmaschine nach Anspruch 9 gelöst. Diese ist insbesondere eine Rundläufermaschine zum Direktbedrucken von Behältern. Es sind dann mehrere erfindungsgemäße Einspanneinheiten an der Maschine vorhanden sowie den Zentrierhalterungen zugeordnete Drehteller. Beispielsweise lassen sich Rundläufermaschinen mit kontinuierlicher Transportbewegung mit besonders hoher Maschinenleistung betreiben. Mit Hilfe der Drehteller lassen sich die Behälter in einer für den jeweiligen Behandlungsschritt gewünschten Drehlage positionieren. Alternativ könnte diese Rundläufermaschinen auch im Takt bewegt werden, insbesondere um die Behälter für einen Ausstattungsprozess vor einem zugeordneten Behandlungsaggregat vorübergehend stationär zu positionieren, wie beispielsweise vor einem Drucker. Alternativ zur Rundläufermaschine, können auch Geradläufer / Linearmaschinen zum Einsatz kommen, deren Bauteile sich analog zur Rundläufermaschine entlang deren Förderstrecke anordnen lassen.

Vorzugsweise umfasst die erfindungsgemäße Behälterbehandlungsmaschine ferner einen Druckluftverteiler zum Beaufschlagen der pneumatischen Federn und/oder der Zentrierhalterungen mit Druckluft. Dies ermöglicht eine zentrale Druckluftversorgung der einzelnen Einspanneinheiten. Entsprechend lassen sich die für die pneumatischen Federn und/oder die Zentrierhalterungen anzulegenden Überdrücke auf einfache Weise zentral einstellen. Es können zu diesem Zweck zentrale Druckminderer oder dergleichen vorgesehen sein. Der Druckluftverteiler kann dann beispielsweise an eine zentrale Druckluftversorgung angeschlossen werden. Vorzugsweise umfasst die erfindungsgemäße Behälterbehandlungsmaschine ferner ein Karussell zum Transportieren der Behälter. Dieses ist vorzugsweise kontinuierlich rotierend ausgebildet. Möglich ist jedoch ebenso ein getakteter Betrieb, also im Wechsel von Behältertransport und Behälterbehandlung bei ruhendem Transport.

Vorzugsweise sind die Drehteller dann unmittelbar auf dem Karussell gelagert, und die Behälterbehandlungsmaschine umfasst Verbindungselemente, mit denen sich die Einspanneinheiten an / von dem Karussell ohne Demontage der Drehteller befestigen / lösen lassen. Die Verbindungselemente sind beispielsweise Verschraubungen, Klemmmechanismen, Hinterschneidungen oder dergleichen.

Eine bevorzugte Ausführungsform der Erfindung ist in der Zeichnung dargestellt. Es zeigen:
- Fig. 1: eine schematische Seitenansicht einer modularen Einspanneinheit; und
- Fig. 2: eine schematische Draufsicht auf eine erfindungsgemäße Rundläufermaschine.

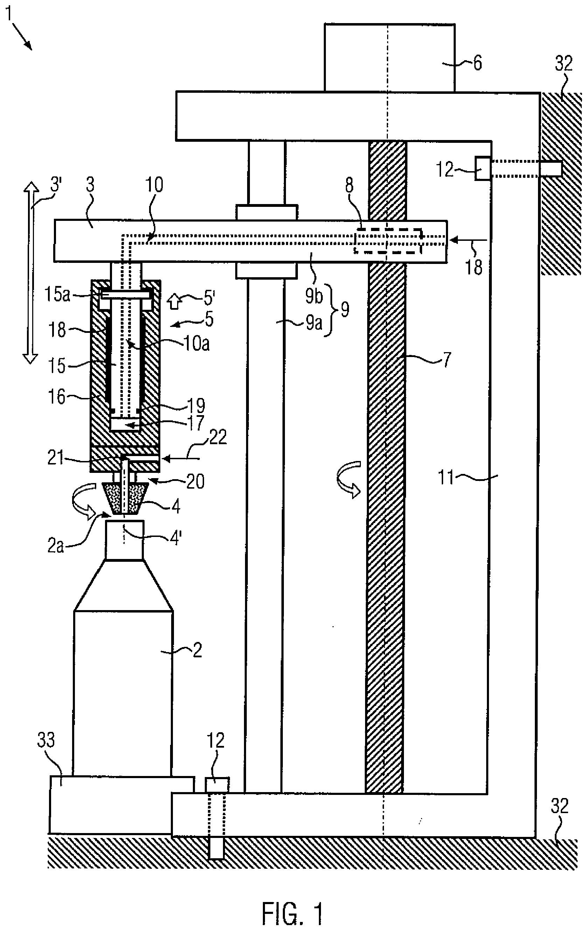

Wie die Fig. 1 erkennen lässt, umfasst eine bevorzugte Ausführungsform der erfindungsgemäßen Einspanneinheit 1 für Behälter 2 einen in vertikaler Richtung 3' insbesondere linear beweglichen Hubarm 3, der eine vorzugsweise um eine Achse 4' drehbare Zentrierhalterung 4 trägt, mit der sich ein Behälter 2 von oben einspannen lässt. Die Zentrierhalterung 4 wirkt beispielsweise mit dem Mündungsbereich 2a des Behälters 2 zusammen. Die Zentrierhalterung 4 könnte ebenso glockenförmig ausgebildet sein, um einen verschlossenen Behälter von oben übergreifend einzuspannen (nicht dargestellt).

Die Zentrierhalterung 4 ist an dem Hubarm 3 mittels einer pneumatischen Feder 5 in vertikaler Richtung federnd gelagert. Aus der in der Fig. 1 gezeigten Ruheposition der Zentrierhalterung 4, bei der diese nicht im Kontakt mit einem Behälter 2 ist, kann die Zentrierhalterung 4 gegen den Widerstand der pneumatischen Feder 5 eine Relativbewegung 5' bezüglich des Hubarms 3 nach oben ausführen. Dies ist beispielsweise dann der Fall, wenn die Zentrierhalterung 4 mit dem Hubarm 3 auf den Behälter 2 abgesenkt wird und nach Herstellen des Kontakts der Hubarm 3 zum Einspannen des Behälters 2 weiter nach unten gefahren wird.

Für den Antrieb des Hubarms 3 ist ein Motor 6 vorhanden, der beispielsweise ein Servomotor oder ein Schrittmotor ist. Der Motor 6 treibt eine Gewindespindel 7 an, die mit einer in dem Hubarm 3 ausgebildeten oder fest mit dem Hubarm 3 verbundenen Spindelmutter 8 zusammenwirkt. Der Hubarm 3 wird beispielsweise durch eine Linearführung 9 mit Hubstangen 9a oder dergleichen und einem daran beweglichen Schlitten 9b geführt. Zur Versorgung der pneumatischen Feder 5 ist eine Druckleitung 10 vorhanden.

Die erfindungsgemäße Einspanneinheit 1 ist vorzugsweise als Modul ausgebildet und umfasst dann ferner eine Konsole 11, oder dergleichen Rahmen, zur Befestigung der Einspanneinheit 1 an einem Karussell 32. Die Konsole 11 ist vorzugsweise selbsttragend ausgebildet, so dass die Einspanneinheit 1 als vormontiertes Modul befestigt und/oder ohne Zerlegen der Einspanneinheit 1 ausgetauscht werden kann. Die Konsole 11 trägt beispielsweise die Gewindespindel 7, den Motor 6 und die Linearführung 9. An der Konsole 11 sind vorzugsweise Befestigungselemente 12 vorgesehen, wie beispielsweise Verschraubungen, Klemmzapfen, Hinterschneidungen oder dergleichen, die eine positionsgenaue und schnelle Montage der Einspanneinheit 1 am Karussell 32 ermöglichen.

Die pneumatische Feder 5 umfasst vorzugsweise einen fest mit dem Hubarm 3 verbundenen Kolben 15 und einen dem gegenüber vertikal beweglichen Hubzylinder 16, der beispielsweise rohrförmig nach unten über den innen liegenden Kolben 15 übersteht. Ein von dem Kolben 15 und dem Hubzylinder 16 eingeschlossener Hubraum 17 lässt sich über die Druckleitung 10 mit Druckluft 18 eines ersten Überdrucks beaufschlagen. Zu diesem Zweck kann beispielsweise im Kolben 15 ein Leitungskanal 10a ausgebildet sein. Die Federwirkung der pneumatischen Feder 5 basiert auf dem einer Komprimierung des Hubraums 17 entgegen wirkenden Überdruck der angelegten Druckluft 18. Der Relativhub des Hubzylinders 16 ist beispielsweise durch einen am Kolben 15 ausgebildeten Anschlag 15a oder einen funktionell gleichwertigen Mechanismus begrenzt.

Zugunsten eines präzisen Übereinandergleitens des Hubzylinders 16 und des Kolbens 15 ist vorzugsweise eine Zylinderbuchse 18 in den Hubzylinder 16 integriert. Schematisch angedeutet sind ferner ein abdichtender Kolbenring 19 sowie ein Lager 20, mit dem die Zentrierhalterung 4 drehbar an dem Hubzylinder 16 befestigt ist.

In der Zentrierhalterung 4 kann ferner ein Druckluftkanal 21 ausgebildet sein, mit dem sich Druckluft 22 eines zweiten Überdrucks in das Innere des Behälters 2 leiten lässt. Insbesondere Kunststoffbehälter können somit auf einen für die jeweilige Bearbeitung und/oder für das Einspannen geeigneten Innendruck aufgeblasen werden. Der Druckluftkanal 21 könnte in gleicher Weise an eine Druckleitung 10' angeschlossen sein wie das pneumatische Ventil 5. Vorteilhaft sind getrennt einstellbare Überdrücke zum Abfedern der Zentrierhalterung 4 und zum Aufblasen des zugeordneten Behälters 2.

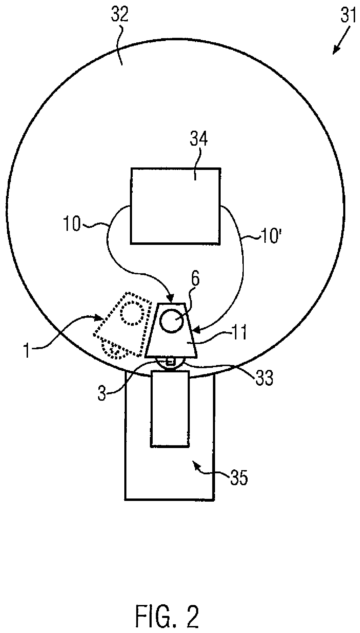

Die Fig. 2 verdeutlicht schematisch eine erfindungsgemäße Behälterbehandlungsmaschine 31 vom Rundläufertyp mit einem insbesondere kontinuierlich umlaufenden Karussell 32, auf dem umfänglich gleichmäßig verteilt mehrere modulare Einspanneinheiten 1 mit Hilfe der Befestigungselemente 12 montiert sind. Der Übersichtlichkeit halber ist in der Fig. 2 lediglich eine weitere Einspanneinheit gestrichelt angedeutet. Den Zentrierhalterungen 4 der Einspanneinheiten 1 ist jeweils ein Drehteller 33 oder dergleichen zum Einspannen der Behälter 2 zugeordnet. Die Einspanneinheiten 1 sind vorzugsweise derart ausgebildet, dass sie sich ohne Demontage der an dem Karussell 32 direkt gelagerten Drehteller 33 austauschen lassen, beispielsweise bei Fehlfunktionen oder beim Umrüsten. Nichtsdestoweniger wäre es auch denkbar, die Zentrierhalterungen 4 für ein separates Umrüsten mit einer Kupplung schnell wechselbar an der pneumatischen Feder zu befestigen. Ebenso könnten die Drehteller 33 Bestandteil der modular austauschbaren Einspanneinheiten 1 sein und zu diesem Zweck an den Konsolen 11, insbesondere gemeinsam mit jeweils zugeordneten Antriebsmotoren für die Drehteller 33, gelagert sein.

Die Fig. 2 zeigt ferner einen zentralen Druckluftverteiler 34, mit dem sich die pneumatischen Federn 5 und/oder Zentrierhalterungen 4 der einzelnen Einspanneinheiten 1 über die Druckleitungen 10, 10' versorgen lassen. An dem Druckluftverteiler 34 könnten beispielsweise zentrale Druckminderer oder dergleichen vorgesehen sein, um den ersten Überdruck in den Hubräumen 17 und/oder den zweiten Überdruck im Inneren der Behälter 2 separat einzustellen. Dies ermöglicht eine schnelle und flexible Anpassung der Überdrücke an jeweils auszuführende Bearbeitungsschritte und/oder Behältertypen.

Die Behälterbehandlungsmaschine 31 ist vorzugsweise eine Maschine zum Direktbedrucken der Behältern 2. In diesem Fall werden beispielsweise lediglich schematisch angedeutete Druckaggregate 35 stationär an der Peripherie des Karussells 32 angedockt.

Die erfindungsgemäßen Einspanneinheiten 1 eignen sich jedoch auch zum Halten / Positionieren von Behältern für andere Bearbeitungsschritte, beispielsweise zum Etikettieren, Inspizieren oder dergleichen. Die erfindungsgemäßen Einspanneinheiten 1 lassen sich ebenso an stationären oder getaktet arbeitenden Behandlungsmaschinen einsetzen.

Mit den individuell steuerbaren Motoren 6 lassen sich die Hubbewegungen zum Einspannen der Behälter 2 flexibel und schnell an unterschiedliche Behältertypen anpassen. Insbesondere ist ein aufwändiger Austausch mechanischer Steuerkurven beim Wechsel des zu behandelnden Behältertyps entbehrlich. Folglich lassen sich Produktionsleistung und Bedienungsfreundlichkeit erfindungsgemäßer Behandlungsmaschinen 31 optimieren.

## Patentansprüche

1. Einspanneinheit (1) für Behälter (2) an Behälterbehandlungsmaschinen (31), insbesondere an solchen zum Direktbedrucken der Behälter, umfassend einen in vertikaler Richtung (3') beweglichen Hubarm (3) mit einer Zentrierhalterung (4) zum Einspannen eines Behälters (2), insbesondere einer Flasche, von oben,
**gekennzeichnet durch**
einen Motor (6) zum Antrieb des Hubarms; eine pneumatische Feder (5), gegen deren Widerstand die Zentrierhalterung nach oben beweglich an dem Hubarm gelagert ist; und wenigstens eine Druckleitung (10), über die sich die pneumatische Feder (5) mit Druckluft (18) beaufschlagen lässt, und wobei die Federkraft der pneumatischen Feder (5) durch einen mit Gas gefüllten Hubraum (17) bereitgestellt wird, und der Widerstand durch Komprimieren des Hubraums (17) entsteht.

2. Einspanneinheit nach Anspruch 1, ferner mit einer von dem Motor (6) angetriebenen Gewindespindel (7) und mit einer fest mit dem Hubarm (3) verbundenen oder an dem Hubarm ausgebildeten Spindelmutter (8).

3. Einspanneinheit nach Anspruch 1, wobei die pneumatische Feder (5) derart ausgebildet ist, dass sich deren Widerstand in Abhängigkeit von einem an die Druckleitung (10) angelegten Luftdruck einstellen lässt.

4. Einspanneinheit nach wenigstens einem der vorigen Ansprüche, wobei die pneumatische Feder (5) einen fest mit dem Hubarm (3) verbundenen Kolben (15) umfasst sowie einen demgegenüber beweglichen Hubzylinder (16), der mit der Zentrierhalterung (4) verbunden ist.

5. Einspanneinheit nach wenigstens einem der vorigen Ansprüche, wobei die Zentrierhalterung (4) drehbar an der pneumatischen Feder (5) gelagert ist.

6. Einspanneinheit nach wenigstens einem der vorigen Ansprüche, wobei in der Zentrierhalterung (4) wenigstens ein Druckluftkanal (21) zum Zuführen von Druckluft (22) in den Behälter (2) ausgebildet ist.

7. Einspanneinheit nach wenigstens einem der vorigen Ansprüche, ferner mit einer Konsole (11), an der der Hubarm (3) und der Motor (6) gelagert sind, und die zur modularen Montage der Einspanneinheit (1) an einer Behälterbehandlungsmaschine (31) ausgebildet ist.

8. Einspanneinheit nach Anspruch 7, ferner mit einem unter der Zentrierhalterung (4) an der Konsole (11) gelagerten Drehteller (33).

9. Behälterbehandlungsmaschine (31), insbesondere zum Direktbedrucken von Behältern (2), mit mehreren Einspanneinheiten (1) nach wenigstens einem der vorigen Ansprüche, wobei den Zentrierhalterungen (4) jeweils ein Drehteller (33) für die Behälter (2) zugeordnet ist.

10. Behälterbehandlungsmaschine nach Anspruch 9, ferner mit einem Druckluftverteiler (34) zum Beaufschlagen der pneumatischen Federn (5) und/oder der Zentrierhalterungen (4) mit Druckluft (18, 22).

11. Behälterbehandlungsmaschine nach Anspruch 9 oder 10, mit einem Karussell (32) zum Transportieren der Behälter (2).

12. Behälterbehandlungsmaschine nach den Ansprüchen 8 und 11, wobei die Drehteller (33) auf dem Karussell (32) gelagert sind, und ferner mit Verbindungselementen (12), mit denen sich die Einspanneinheiten (1) an / von dem Karussell ohne Demontage der Drehteller befestigen / lösen lassen.

## Claims

1. Clamping unit (1) for containers (2) at container handling machines (31), in particular at those for directly printing onto the containers, comprising a lifting arm (3) movable in the vertical direction (3') with a centering support (4) for clamping a container (2), in particular a bottle, from above, **characterized by** a motor (6) for driving the lifting arm; a pneumatic spring (5) against the resistance of which the centering support is mounted at the lifting arm so as to be movable to the top; and at least one pressure line (10) via which compressed air (18) may be applied to the pneumatic spring (5), and wherein the spring force of the pneumatic spring (5) is provided by a cylinder space (17) filled with gas, and the resistance is formed by compressing the cylinder space (17).

2. Clamping unit according to claim 1, further comprising a threaded spindle (7) driven by the motor (6) and a spindle nut (8) firmly connected to the lifting arm (3) or embodied at the lifting arm.

3. Clamping unit according to claim 1, wherein the pneumatic spring (5) is designed such that its resistance may be adjusted depending on an air pressure applied to the pressure line (10).

4. Clamping unit according to at least one of the preceding claims, wherein the pneumatic spring (5) comprises a piston (15) firmly connected to the lifting arm (3) and a stroke cylinder (16) movable with respect to it and connected with the centering support (4).

5. Clamping unit according to at least one of the preceding claims, wherein the centering support (4) is rotatably mounted at the pneumatic spring (5).

6. Clamping unit according to at least one of the preceding claims, wherein at least one compressed air conduit (21) is provided in the centering support (4) for supplying compressed air (22) into the container (2).

7. Clamping unit according to at least one of the preceding claims, further comprising a console (11) at which the lifting arm (3) and the motor (6) are mounted, and which is embodied for a modular assembly of the clamping unit (1) at a container handling machine (31).

8. Clamping unit according to claim 7, further comprising a rotary plate (33) mounted underneath the centering support (4) at the console (11).

9. Container handling machine (31), in particular for directly printing onto containers (2), with several clamping units (1) according to at least one of the preceding claims, wherein one rotary plate (33) for the containers (2) each is associated with the centering supports (4).

10. Container handling machine according to claim 9, further comprising a compressed air distributor (34) for applying compressed air (18, 22) to the pneumatic springs (5) and/or the centering supports (4).

11. Container handling machine according to claim 9 or 10 with a carousel (32) for transporting the containers (2).

12. Container handling machine according to claims 8 and 11, wherein the rotary plates (33) are mounted on the carousel (32), and further comprising connecting elements (12) by which the clamping units (1) may be fixed to / released from the carousel without removing the rotary plates.

## Revendications

1. Unité de serrage (1) pour contenants (2) sur des machines de traitement de contenants (31), notamment de telles machines destinées à l'impression directe des contenants, comprenant un bras de levage (3) mobile dans la direction verticale (3') et possédant un support de centrage (4) destiné à enserrer par le haut un contenant (2), notamment une bouteille,
**caractérisée par**
un moteur (6) pour l'entraînement du bras de levage ; un ressort pneumatique (5) à l'encontre de la résistance duquel le support de centrage est monté mobile vers le haut sur le bras de levage ; et au moins une conduite de pression (10) par l'intermédiaire de laquelle le ressort pneumatique (5) peut être alimenté en air comprimé (18), et la force de ressort du ressort pneumatique (5) étant fournie par une chambre de cylindre de levage (17) remplie de gaz, et la résistance étant obtenue par compression de la chambre de cylindre de levage (17).

2. Unité de serrage selon la revendication 1, comprenant par ailleurs une broche filetée (7) entraînée par le moteur (6), et un écrou de broche (8) relié de manière fixe au bras de levage (3) ou formé sur le bras de levage.

3. Unité de serrage selon la revendication 1, dans laquelle le ressort pneumatique (5) est configuré de manière telle que sa résistance peut être réglée en fonction d'une pression d'air appliquée à la conduite de pression (10).

4. Unité de serrage selon l'une au moins des revendications précédentes, dans laquelle le ressort pneumatique (5) comprend un piston (15) relié de manière fixe au bras de levage (3), ainsi qu'un cylindre de levage (16), qui est mobile par rapport au piston et est relié au support de centrage (4).

5. Unité de serrage selon l'une au moins des revendications précédentes, dans laquelle le support de centrage (4) est monté rotatif sur le ressort pneumatique (5).

6. Unité de serrage selon l'une au moins des revendications précédentes, dans laquelle il est formé dans le support de centrage (4), au moins un canal d'air comprimé (21) destiné à l'amenée d'air comprimé (22) dans le contenant (2).

7. Unité de serrage selon l'une au moins des revendications précédentes, comprenant par ailleurs une console (11) sur laquelle sont montés le bras de levage (3) et le moteur (6), et qui est configurée pour le montage modulaire de l'unité de serrage (1) sur une machine de traitement de contenants (31).

8. Unité de serrage selon la revendication 7, comprenant par ailleurs un plateau tournant (33) monté sur la console (11), sous le support de centrage (4).

9. Machine de traitement de contenants (31), notamment pour l'impression directe des contenants (2), comprenant plusieurs unités de serrage (1) selon l'une au moins des revendications précédentes, machine dans laquelle un plateau tournant (33) pour les contenants (2) est associé respectivement à chacun des supports de centrage (4).

10. Machine de traitement de contenants selon la revendication 9, comprenant par ailleurs un distributeur d'air comprimé (34) pour alimenter les ressorts pneumatiques (5) et/ou les supports de centrage (4) en air comprimé (18, 22).

11. Machine de traitement de contenants selon la revendication 9 ou la revendication 10, comprenant une table rotative dite carrousel (32) pour assurer le transport des contenants (2).

12. Machine de traitement de contenants selon les revendications 8 et 11, dans laquelle les plateaux tournants (33) sont montés sur le carrousel (32), et comprenant par ailleurs des éléments de liaison (12) à l'aide desquels les unités de serrage (1) peuvent être fixées sur le carrousel / démontées du carrousel, sains démontage des plateaux tournants.
